Europäisches Patentamt

(19) European Patent Office

Office européen des brevets

(11) Publication number: **0 019 480**
**B1**

(12) **EUROPEAN PATENT SPECIFICATION**

(45) Date of publication of patent specification: **05.10.83**

(51) Int. Cl.³: **G 01 K 13/02**

(21) Application number: **80301637.7**

(22) Date of filing: **19.05.80**

(54) Method and apparatus for measuring the temperature of hot gases.

(30) Priority: **22.05.79 GB 7917694**

(43) Date of publication of application:
**26.11.80 Bulletin 80/24**

(45) Publication of the grant of the patent:
**05.10.83 Bulletin 83/40**

(84) Designated Contracting States:
**BE DE FR GB IT LU NL**

(56) References cited:
**US - A - 3 204 447**
**US - A - 3 453 880**
**US - A - 3 808 889**
**US - A - 4 085 613**

**ATM MESSTECHNISCHE PRAXIS, vol. 476,**
**September 1975, pages R137—R140 Munich,**
**DE. B. BRAUN: "Temperaturmessung mit**
**kleiner Verzugszeit bei hohem Heissdampfdruck".**

(73) Proprietor: **F.L. Smidth & Co. A/S**
**77 Vigerslev Allé**
**DK-2500 Valby Copenhagen (DK)**

(72) Inventor: **Knudsen, Hans Brun**
**c/o F.L. Smidth & Co. A/S. 77 Vigerslev Alle**
**DK-2500 Valby, Copenhagen (DK)**

(74) Representative: **Jackson, Peter Arthur et al,**
**GILL JENNINGS & EVERY 53-64 Chancery Lane**
**London WC2A 1HN (GB)**

Courier Press, Leamington Spa, England.

### Method and apparatus for measuring the temperature of hot gases

The invention relates to a method of measuring the temperature of hot gases and is particularly useful in surroundings where there is also thermal radiation. When measuring the temperature of hot gases at a temperature of approx. 1000°C or more, e.g. when measuring the temperature of kiln exit gases, the measuring will often be disturbed by the fact that the measuring body apart from receiving heat from the hot gases also receives or gives off some radiant heat depending upon the temperature of the surroundings, e.g. in the case of a kiln, from a heat source, e.g. a flame which heats the kiln. Consequently, the measuring body must be protected against heat transfer by radiation for instance by enclosing it in a polished mantle. It is, however, difficult to find materials capable of maintaining a bright surface at the high temperatures to which the measuring body and the mantle are heated, when measuring the temperature of hot gases.

An example of one technique using the heat flow characteristics of a measuring body is described in "Temperaturmessung mit kleiner Verzugzeit bei hohem Heissdampfdruck" by B. Braun in ATM Messtechnische Praxis (Vol 476, September 1975, R137—R140). This only describes broadly the concept of the technique and provides no suggestion as to how the problems outlined above could be solved.

Thus it is an object of the invention to devise a method of measuring by which it is unnecessary to heat the measuring body to the temperature of the hot gas, the temperature of which is to be measured.

According to the invention the object is achieved by taking a measurement representative of the heat transfer from the gas to a radiation-protected measuring body which is exposed to the gas and the temperature of which, during the measuring, is maintained at a known temperature considerably below the gas temperature to be measured, and deriving the temperature of the gas by use of the relationship $Q=hA (T_G-T)$, in which:

$Q$ is the heat transfer,
$h$ is the coefficient of heat transfer between the hot gas and the measuring body,
$A$ is the surface area of the measuring body,
$T$ is the temperature of the measuring body, and
$T_G$ is the gas temperature to be measured, characterized by the use of two geometrically identical measuring bodies which are maintained at two different known temperatures below the gas temperature to be measured, and thereby deriving the temperature of the gas without the need to know the values of $h$ or $A$.

The heat transfer coefficient $h$ is only determinable to a very uncertain and theoretical extent and this method enables knowledge of the value of $h$ to be unnecessary.

The following relationships exist,

$$Q_a=hA (T_G-T_a) \text{ and } Q_b=hA (T_G-T_b),$$

in which:
$Q_a$ and $Q_b$ are the heats transferred to the respective measuring bodies,
$h$ is the coefficient of heat transfer between the hot gas and the respective radiation-protected measuring bodies,
$A$ is the surface area of each measuring body
$T_a$ and $T_b$ are the temperatures of the respective measuring bodies, and
$T_G$ is the gas temperature to be measured.

The two measuring bodies being geometrically identical, the quantity $hA$ is the same in both equations, and consequently can be eliminated. It should be noted that because of the differing temperatures of the measuring bodies there may be a minor difference in the heat transfer coefficient of the two measuring bodies, but at the temperatures occurring in practice this difference is without significance, and the difference can be offset by using an easily accessible correction factor.

The measurement representative of the heat transfer to each measuring body may be a measurement representative of the heat flow through a known heat conductor, which conducts away from the measuring body the heat transferred to the measuring body from the gas. This is appropriate as, because the measuring body is maintained at a constant temperature, the heat flow conducted away from the measuring body equals the heat flow transferred to the measuring body from the contact with the hot gas, the temperature of which is to be measured.

The measurement representative of the heat flow through the known heat conductor may be obtained by taking a measurement of the temperature at two points along the heat conductor and use of the relationship

$$Q=\frac{K}{L} A_t (T_1-T_2)$$

in which:
$Q$ is the heat flow,
$K$ is the thermal conductivity of the heat conductor,
$L$ is the distance between the two points of measurement,
$A_t$ is the cross-sectional area of the heat conductor, and
$T_1$ and $T_2$ are the temperatures measured at the two points.

Another way to obtain the measurement representative of the heat transfer to each measuring body is to cool the measuring body by passing a cooling agent through it. The flow rate of the cooling agent may be regulated to keep the output temperature of the cooling agent from the measuring body constant which will reflect a constant temperature of the body. The heat flow carried away from the measuring member can then be found as the product of the flow rate of the cooling agent, the specific heat of the agent, and the rise in temperature of the cooling agent in passing through the measuring body.

The invention also includes an apparatus for carrying out the new method the apparatus being characterised by two geometrically identical radiation-protected measuring bodies each having an end exposed, in use, to the gas the temperature of which is to be measured; means for maintaining the temperature of the measuring bodies different and below the gas temperature to be measured; means for measuring the temperature of the measuring bodies; and means for deriving the heat transfer to the measuring bodies from the gas.

In one construction, each of the measuring bodies is constituted by one end of a respective one of two heat tubes the working temperatures of which are, in use, different and considerably below the gas temperature to be measured, the other end of each heat tube being connected to one end of a respective one of two heat conducting rods, the other end of which is kept cool; and the means for deriving the heat transfer comprises temperature measuring devices for measuring the temperature at two points along each heat conducting rod.

Very fast distribution of the heat transferred to the measuring bodies is thus achieved by providing each measuring body as part of a respective·heat tube as the conductivity of a heat tube at its working temperature and higher temperatures is hundreds of times larger than that of commonly known solids, and the entire heat tube will thus rapidly obtain approximately the same temperature as the measuring body. Furthermore, by providing heat tubes with different working temperatures, the temperatures of each heat tube may be easily maintained different, in use.

In another construction, the means for maintaining the temperature of the measuring bodies different and below the gas temperature comprises means for passing a cooling agent through the bodies, the means for measuring the temperatures of the measuring bodies comprises temperature sensing devices in return ducts for the cooling agent; and the means for deriving the heat transfer comprises temperature measuring devices in supply and return ducts for the cooling agent and at least one flowmeter for the cooling agent.

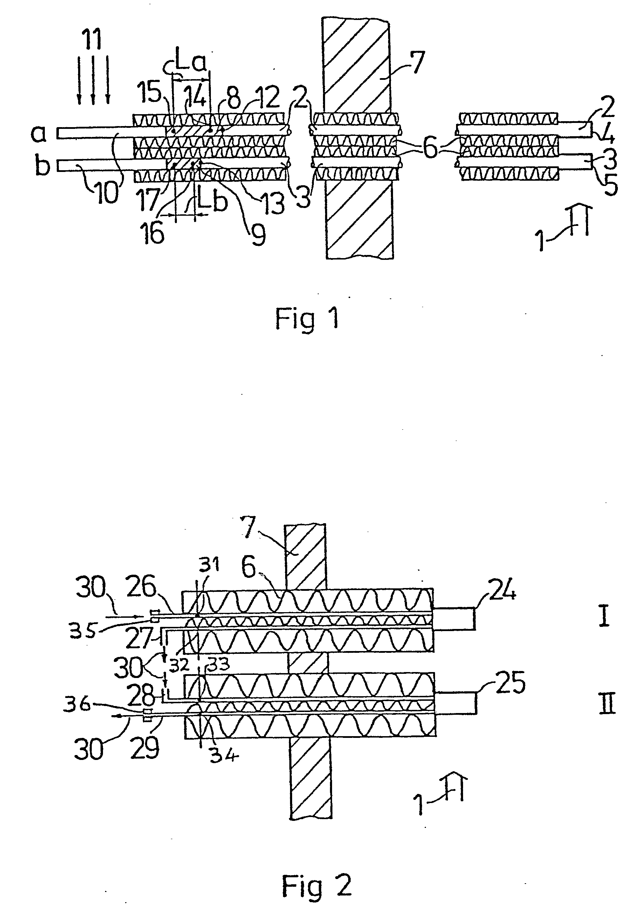

Two examples of apparatus for carrying out the method in accordance with the invention are illustrated diagrammatically in Figures 1 and 2 of the accompanying drawings.

In Figure 1, the gas, the temperature of which is to be measured, is marked by an arrow 1, and is led past two geometrically identical measuring bodies, each of which is constituted by an end of a heat tube 2 and 3 respectively. The tubes are equipped with a polished, radiation reflecting, heat transferring mantle 4 and 5 respectively. The remaining lengths of the heat tubes 2 and 3 respectively are insulated by means of an insulating mantle 6, and pass through a kiln wall 7. At their opposite ends the heat tubes 2 and 3 are connected to heat conducting rods 8 and 9 respectively, the opposite ends of which via two further heat tubes 10 are cooled by means of a cooling agent, such as water, as indicated by arrows 11.

At the ends of the heat tubes 2 and 3, which are connected to the heat conducting rods 8 and 9, are located temperature measuring devices 12 and 13 respectively. On the heat conducting rod 8 are located temperature measuring devices 14, 15 spaced by a distance $L_a$ and likewise on the heat conducting rod 9, temperature measuring devices 16, 17 spaced by a distance $L_b$. The two heat tubes 2 and 3 are chosen so as to have differing working temperatures which are considerably below the temperature to be measured.

The working temperature of a heat tube is determined by the heat transferring medium used in the tube and at and above the working temperatures the conductivity of the heat tube is hundreds of times larger than e.g. copper. If more heat is passed to the "hot" end of the heat tube than is passed away from the "cold" one, the working temperature rises only a little, but the heat tube still retains its fine thermal conductivity. A constantly supplied heat excess will lead to destruction of the heat tube.

The heat tubes 2 and 3 may be chosen so as to have working temperatures of e.g. 400°C and 150°C. The heat passed to the ends of the heat tubes inside the kiln must be dissipated at their opposite ends outside the kiln. This is done partly through the heat conducting rods 8 and 9 respectively, and partly through the two heat tubes 10 having a low working temperature e.g. 35°C, the heat tubes 10 being cooled by the cooling agent.

As the measuring bodies at the projecting ends of the heat tubes 2 and 3 are so designed as to have identical capacities of heat transfer, the heat flow in the heat tube 3 having the lower working temperature, will be larger than in the tube 2. As the temperature drop along the heat conducting rod 9 should be smaller than the temperature drop along the heat conducting rod 8, the rod 9 should preferably be shorter than the rod 8. The two heat tubes 10 being nearly identical and cooled by the same cooling agent, the lowermost heat tube which is to conduct away a larger amount of heat, will operate at a somewhat higher working temperature than the uppermost heat tube.

If the temperature is measured at the points indicated by the measuring devices 12 and 13, the measured temperatures indicate the temperature of the measuring bodies located in the kiln. This is because the temperature of such parts of the heat tubes which are outside the kiln, does not differ greatly from the parts which are inside the kiln and consequently from the temperature of the respective measuring bodies receiving heat from the hot gas, the temperature of which is to be measured. Because the heat tubes and the heat conducting rods connected to them are surrounded by insulation 6, the heat is conducted away through the heat conducting rods 8, 9 and the flow of heat through the individual rods can be determined by measuring the temperature at points 14, 15 and 16, 17 respectively, being spaced at known intervals. If the two measuring systems are called a and b respectively, the desired exit gas temperature can be calculated from the following equation system:

$$Q_a = \frac{K_a}{L_a} A_{t_a} (T_{14} - T_{15}) = hA(T_G - T_{12})$$

$$Q_b = \frac{K_b}{L_b} A_{t_b} (T_{16} - T_{17}) = hA(T_G - T_{13})$$

in which:

$Q_a$ and $Q_b$ are the heat conducted away through the respective systems,

$K_a$ and $K_b$ are the thermal conductivity of the material used for the rods 8 and 9 respectively,

$L_a$ and $L_b$ are the distances between the temperature measuring devices 14, 15 and 16, 17 respectively

$A_{t_a}$ and $A_{t_b}$ are the cross-sectional areas of the rods 8 and 9 respectively,

h is the heat transfer coefficient of the heat transfer between the hot gas, the temperature of which is to be measured and the identical measuring bodies,

A is the surface area of the measuring bodies,

$T_{12} - T_{17}$ are the temperatures measured at the points 12—17, and

$T_G$ is the gas temperature to be determined.

When using the same material and same cross-sectional area in respect of the rods 8 and 9 the equations reduce to:

$$\frac{Q_a}{Q_b} = \frac{L_b}{L_a} \cdot \frac{T_{14} - T_{15}}{T_{16} - T_{17}} = \frac{T_G - T_{12}}{T_G - T_{13}}$$

and the value of $T_G$ can readily be computed from a knowledge of $L_a$ and $L_b$ and readings of $T_{12}, T_{13}, T_{14}, T_{15}, T_{16}$ and $T_{17}$.

In the Figure 2 example, two polished heat- reflecting, identical measuring bodies 24, 25 located in the gas 1, the temperature of which is to be measured, are kept cooled at a temperature considerably below that of the gas. The cooling is brought about by passing a liquid cooling agent through the measuring bodies via supply pipe ducts 26, 28 and return pipe ducts 27, 29. The heat conducted away from the respective measuring devices is calculated on the basis of the volume of fluid flowing through, the specific heat of the cooling agent and the temperature difference between the cooling agent in the supply pipe and that in the return pipe. To make the two measuring bodies work at different temperatures, the cooling agent can be made to flow at different velocities through the measuring bodies, or the same flow of cooling agent can be used in which case the inlet temperature of the cooling agent to one of the measuring bodies should be lower than to the other body. This is conveniently achieved by coupling the two cooling circuits in series, in such a way that the return pipe of one constitutes the supply pipe of the other as indicated in Figure 2, in which the return pipe 27 is connected to the supply pipe 28. The arrows 30 indicate the flow of cooling agent. The pipes are insulated from their surroundings and from each other in order to ensure that the cooling agent temperature increase in all essentials only derives from the heat conducted away from the measuring bodies.

The pipes 26 and 28 and the pipes 27 and 29 will be provided with temperature measuring devices 31, 32, 33 and 34 analogous to the devices 12—17, and with one or more flowmeters 35 and 36.

The temperature of a measuring body can be said to equate that of the cooling agent returned from the body in question. As a matter of fact the temperature of the measuring body will lie a little above that value. This temperature difference can be determined by calibration of the sensor, and can be included in the calculations.

If the two measurement arrangements in Figure 2 are designated I and II respectively, the following equations appear when calculating the heat which per unit of time is passed to and conducted away from the respective measuring bodies:

$$Q_I = F_I \cdot V_{SI} \cdot (T_{27} - T_{26}) = hA(T_G - T_I)$$

$$Q_{II} = F_{II} \cdot V_{SII} \cdot (T_{29} - T_{27}) = hA(T_G - T_{II})$$

in which:

$Q_I$ and $Q_{II}$ is the heat transferred through the respective systems,

$F_I$ and $F_{II}$ is the flow of cooling agent through the respective measuring bodies,

$V_{SI}$ and $V_{SII}$ is the specific heat of the cooling agent used in the respective systems,

$T_{26} - T_{29}$ are the cooling agent temperatures in the pipes 26—29,

$h$ is the heat transfer coefficient of the heat transfer between the hot gas, the temperature of which is to be measured, and the identical measuring bodies,

$A$ is the surface area of the measuring bodies,

$T_G$ is the gas temperature to be determined, and

$T_I$ and $T_{II}$ are the temperatures of the respective measuring bodies.

If the same cooling agent is used, and the same velocity of flow in the two measuring systems, which e.g. is the case if the two systems are coupled in series, $T_G$ can be calculated by the equation

$$\frac{T_{27}-T_{26}}{T_{29}-T_{28}} = \frac{T_G-T_I}{T_G-T_{II}}$$

in which $T_I=T_{27}+C_I$ and $T_{II}=T_{29}+C_{II}$

$C_I$ and $C_{II}$ being correction quantities which can be calculated by calibration.

Furthermore, if the measuring systems are coupled in series $T_{27}=T_{28}$.

## Claims

1. A method of measuring the temperature of a hot gas, particularly in surroundings where there is also thermal radiation, by taking a measurement representative of the heat transfer from the gas to a radiation-protected measuring body which is exposed to the gas and the temperature of which, during the measuring, is maintained at a known temperature considerably below the gas temperature to be measured, and deriving the temperature of the gas by use of the relationship $Q=hA\,(T_G-T)$, in which:

$Q$ is the heat transfer,

$h$ is the coefficient of heat transfer between the hot gas and the measuring body,

$A$ is the surface area of the measuring body,

$T$ is the temperature of the measuring body, and

$T_G$ is the gas temperature to be measured, characterised by the use of two geometrically identical measuring bodies which are maintained at two different known temperatures below the gas temperature to be measured, and thereby deriving the temperature of the gas without the need to know the values of $h$ or $A$.

2. An apparatus for carrying out the method according to claim 1, characterised by two geometrically identical radiation-protected measuring bodies (2, 3; 24, 25) each having an end exposed, in use, to the gas the temperature of which is to be measured; means (8, 9, 10; 26—29) for maintaining the temperature of the measuring bodies different and below the gas temperature to be measured; means (12, 13; 32, 34) for measuring the temperature of the measuring bodies; and means (14—17; 31—36) for deriving the heat transfer to the measuring bodies from the gas.

3. An apparatus according to claim 2, characterised in that each of the measuring bodies is constituted by one end of a respective one of two heat tubes (2, 3) the working temperature of which are, in use, different and considerably below the gas temperature to be measured, the other end of each heat tube being connected to one end of a respective one of two heat conducting rods (8, 9), the other end of which is kept cool; and the means for deriving the heat transfer comprises temperature measuring devices (14—17) for measuring the temperature at two points along each heat conducting rod.

4. An apparatus according to claim 3, characterised in that the heat conducting rods in the two measuring systems are of unequal size, the rod in the measuring system with the heat tube (9) having the lower working temperature being the shorter one.

5. An apparatus according to claim 2, characterised in that the means for maintaining the temperatures of the measuring bodies (24, 25) different and below the gas temperature comprises means (26—29) for passing a cooling agent through the bodies; the means for measuring the temperatures of the measuring bodies comprises temperature sensing devices (32, 34) in return ducts (27, 29) for the cooling agent; and the means for deriving the heat transfer comprises temperature measuring devices (31—34) in supply and return ducts (26—30) for the cooling agent and at least one flowmeter (35, 36) for the cooling agent.

6. A kiln fitted with an apparatus according to any one of claims 2 to 5.

## Patentansprüche

1. Verfahren zum Messen der Temperatur eines heißen Gases, insbesondere in Umgebungen, in denen auch thermische Strahlung herrscht, durch Aufnehmen einer Messung repräsentativ für den Wärmeübergang von dem Gas an einen strahlungsgeschützten Meßkörper, der dem Gas ausgesetzt ist und dessen Temperatur während des Messens auf einer bekannten Temperatur erheblich unter der zu messenden Gastemperatur liegt, und durch Ermitteln der Temperatur des Gases unter Benutzung der Beziehung $Q=hA\,(T_G-T)$, wobei bedeuten

$Q$ den Wärmeübergang,

$h$ den Koeffizienten des Wärmeübergangs zwischen dem heißen Gas und dem Meßkörper,

$A$ den Oberflächenbereich des Meßkörpers,

$T$ die Temperatur des Meßkörpers und

$T_G$ die zu messende Gastemperatur, gekennzeichnet durch die Verwendung von zwei geometrisch identischen Meßkörpern, die auf zwei unterschiedlichen bekannten Temperaturen unterhalb der zu messenden Gastemperatur gehalten werden, und durch Ermitteln der Gastemperatur ohne Notwendigkeit, die Werte von h und A zu kennen.

2. Vorrichtung zur Durchführung des Verfahrens nach Anspruch 1, gekennzeichnet durch zwei geometrisch identische strahlungsgeschützte Meßkörper (2, 3; 24, 25) je mit einem Ende, das im Betrieb dem Gas ausgesetzt ist, dessen Temperatur zu messen ist, durch Mittel (8, 9, 10; 26—29) zum Halten der Temperatur der Meßkörper unterschiedlich zu und unterhalb der zu messenden Gastemperatur, durch Mittel (12, 13; 32, 34) zum Messen der Temperatur der Meßkörper und durch Mittel (14—17; 31—36) zum Ermitteln des Wärmeübergangs von dem Gas an die Meßkörper.

3. Vorrichtung nach Anspruch 2, dadurch gekennzeichnet, daß jeder der Meßkörper gebildet ist von einem Ende eines von zwei Heizrohren (2, 3), deren Arbeitstemperaturen im Betrieb unterschiedlich zu der zu messenden Gastemperatur sind und erheblich unter dieser liegen, wobei das andere Ende jedes Heizrohrs an ein Ende einer von zwei wärmeleitenden Stangen (8, 9) angeschlossen ist, deren anderes Ende kühlgehalten ist, und daß die Mitteln zum Ermitteln des Wärmeübergangs in Temperaturmeßeinrichtungen (14—17) zum Messen der Temperatur an zwei Punkten entlang jeder der wärmeleitenden Stangen bestehen.

4. Vorrichtung nach Anspruch 3, dadurch gekennzeichnet, daß die wärmeleitenden Stangen in den beiden Meßsystemen ungleich groß sind, wobei die Stange in dem Meßsystem mit dem Heizrohr (9), das die niedrigere Arbeitstemperatur aufweist, die kürzere Stange ist.

5. Vorrichtung nach Anspruch 2, dadurch gekennzeichnet, daß die Mittel zum Halten der Temperaturen der Meßkörper (24, 25) unterschiedlich zu und unterhalb der Gastemperatur in Mitteln (26—29) zur Hindurchführung eines Kühlmittels durch die Körper bestehen, daß die Mittel zum Messen der Temperaturen der Meßkörper in Temperaturfühleinrichtungen (32, 34) in Rückführkanälen (27, 29) für das Kühlmittel bestehen und daß die Mittel zum Ermitteln des Wärmeübergangs in Temperaturmeßeinrichtungen (31—34) in Zuführund Rückführkanälen (26—30) für das Kühlmittel und in mindestens einem Strömungsmesser (35, 36) für das Kühlmittel bestehen.

6. Ofen ausgestattet mit einer Vorrichtung nach einem der Ansprüche 2 bis 5.

## Revendications

1. Procédé pour mesurer la température d'un gaz chaud, notamment dans des environnements dans lesquels il existe également un rayonnement thermique, par la prise d'une mesure représentant la transmission de chaleur du gaz vers un corps de mesure, protégé du rayonnement, corps qui est exposé au gaz et dont la température, pendant la mesure, est maintenue à une valeur connue considérablement inférieure à la température du gaz à mesurer, et déduction de la température du gaz à l'aide de la relation:

$$Q = hA\,(T_G - T),$$

dans laquelle:
Q est la transmission de chaleur,
$h$ est le coefficient de transmission de chaleur entre le gaz chaud et le corps de mesure,
A est l'aire de la surface du corps de mesure,
T est la température du corps de mesure, et
$T_G$ est la température de gaz à mesurer, procédé caractérisé en ce qu'on utilise deux corps de mesure, géométriquement identiques, qui sont maintenus à deux températures différentes connues au-dessous de la température du gaz à mesurer, et l'on en déduit la température du gaz sans qu'il soit nécessaire de connaître les valeurs de $h$ ou A.

2. Appareil pour la mise en oeuvre du procédé selon la revendication 1, caractérisé en ce qu'il comporte deux corps (2, 3; 24, 25) de mesure, géométriquement identiques, protégés du rayonnement et dont chacun comporte, en service, une extrémité exposée au gaz dont la température est à mesurer; un moyen (8, 9, 10; 26 à 29) pour maintenir la température des corps de mesure différente et au-dessous de la température du gaz à mesurer; un moyen (12, 13; 32, 34) pour mesurer la température des corps de mesure; et un moyen (14 à 17; 31 à 36) pour en déduire la transmission de chaleur du gaz aux corps de mesure.

3. Appareil selon la revendication 2, caractérisé en ce que chacun des corps de mesure est constitué par une extrémité respective d'un tube d'un groupe de deux tubes (2, 3) caloporteurs dont la température de fonctionnement est, en service, différente et considérablement inférieure à la température du gaz à mesurer, l'autre extrémité de chaque tube caloporteur étant reliée à une extrémité respective d'une tige d'un groupe de deux tiges (8, 9) de conduction de chaleur dont l'autre extrémité est maintenue froide; et en ce que le moyen pour déduire la transmission de chaleur comprend des dispositifs (14 à 17) pour mesurer la température en deux points le long de chaque tige de conduction de la chaleur.

4. Appareil selon la revendication 3, caractérisé en ce que les tiges de conduction de la chaleur sont de dimensions inégales dans les deux systèmes de mesure, la tige du système de mesure correspondant au tube (9), qui a la température de fonctionnement inférieure, étant la tige courte.

5. Appareil selon la revendication 2, caractérisé en ce que le moyen pour maintenir les températures des corps (24, 25) de mesure différentes et inférieures à la température du gaz comprend un moyen (26 à 29) pour faire passer un agent de refroidissement dans les corps; le moyen pour mesurer les températures des corps de mesure comprend des dispositifs (32, 34) de détection de température sur les conduits (27, 29) de retour de l'agent de refroidissement; et le moyen pour déduire la transmission de chaleur comprend des dispositifs (31 à 34) de mesure de température dans les conduits (26 à 30) d'alimentation et de retour de l'agent de refroidissement, et au moins un débitmètre (35, 36) pour mesurer le débit de l'agent de refroidissement.

6. Four équipé d'un appareil selon l'une quelconque des revendications 2 à 5.

Fig 1

Fig 2